# EUROPÄISCHE PATENTANMELDUNG

(11) **EP 2 048 125 A2**
(43) Veröffentlichungstag der Anmeldung: **15.04.2009**
(21) Anmeldenummer: 08014009.8
(22) Anmeldetag: 05.08.2008
(51) Int. Cl.: C04B 41/64

(54) **Betonteil mit einer Beschichtung**

(30) Priorität: 11.10.2007 DE 102007048706; 17.10.2007 DE 102007049806
(71) Anmelder: bulthaup GmbH & Co KG, 84155 Bodenkirchen (DE)
(72) Erfinder: Stigler, Martin, 84137 Vilsbiburg (DE); Langer, Otto, 84494 Neumarkt-St. Veit (DE); Rieder, Manfred, 84160 Frontenhausen (DE); Liebl, Stefan, 84140 Gangkofen (DE)
(74) Vertreter: Herrmann, Uwe

(57) **Zusammenfassung**

Die vorliegende Erfindung betrifft ein Betonteil mit einer Beschichtung, wobei die Beschichtung aus präkeramischen Polymeren besteht, präkeramische Polymere enthält oder wenigstens teilweise auf präkeramischen Polymeren basiert. Die Erfindung betrifft des Weiteren ein Möbelstück oder Funktionselement sowie ein Verfahren zum Aufbringen einer Beschichtung auf ein Betonteil.

## Beschreibung

Die vorliegende Erfindung betrifft ein Betonteil mit einer Beschichtung.

Beton wird aufgrund seiner Eigenschaften häufig für tragende Elemente, wie Pfosten, Stützen, Träger, Wandelemente und dergleichen eingesetzt und findet sein bevorzugtes Verwendungsgebiet somit im Baubereich.

Der vorliegenden Erfindung liegt die Aufgabe zugrunde, ein Betonteil mit einer Oberflächenbeschichtung bereitzustellen, die es ermöglicht, das Betonteil für weitere Anwendungsgebiete, insbesondere im Küchen- und Wohnbereich einsetzen zu können.

Diese Aufgabe wird durch ein Betonteil mit den Merkmalen des Anspruchs 1 gelöst. Danach ist vorgesehen, dass das Betonteil eine Beschichtung aufweist, wobei die Beschichtung aus präkeramischen Polymeren besteht, präkeramische Polymere enthält oder wenigstens teilweise auf präkeramischen Polymeren basiert.

Mit einer derartigen Beschichtung ist es beispielsweise möglich, dass die Betonteile eine Oberflächengüte erreichen, die die Küchennorm für Küchenarbeitsplatten erfüllt.

Die Beschichtung kann transparent oder transluzent sein. Sie ist vorzugsweise durchsichtig.

Dadurch wird erreicht, dass der Betoncharakter der Teile durch die Beschichtung nicht oder nicht wesentlich verändert wird.

In weiterer Ausgestaltung der Erfindung ist vorgesehen, dass die präkeramischen Polymere derart ausgeführt sind, dass sie ohne Temperaturerhöhung, d.h. ohne eigens für diesen Zweck vorgesehene Wärmeeinwirkung aushärten und/oder vernetzten.

Ferner kann vorgesehen sein, dass die Aushärtung bzw. die Vernetzung mit Hilfe von Wärme erfolgt bzw. beschleunigt wird.

In weiterer Ausgestaltung der Erfindung ist vorgesehen, dass die Beschichtung in Form einer oder in Form mehrerer Schichten ausgeführt ist. Diese Schichten können dieselbe oder auch unterschiedliche Zusammensetzungen aufweisen.

Denkbar ist es beispielsweise, zwei oder auch mehr als zwei Aufträge zu verwenden, wobei zunächst ein dünnflüssiges Material aufgebracht wird, das die präkeramischen Polymere enthält und vergleichsweise tief in den Beton eindringt und sodann ein dickflüssigeres Material, das ebenfalls präkeramische Polymere enthält und das vorzugsweise sehr gut mit der ersten Beschichtung vernetzt und auf der Betonoberfläche eine widerstandsfähige Schutzschicht bildet.

Die beiden dünnflüssigen bzw. weniger dünnflüssigen Lösungen können dieselben oder auch andere präkeramische Polymere und/oder Konzentrationen dieser Polymere aufweisen.

In weiterer Ausgestaltung der Erfindung ist vorgesehen, dass es sich bei dem Betonteil um ein Möbelstück handelt, dass das Bauteil einen Teil eines Möbelstückes bildet oder als Funktionselement, vorzugsweise als Küchenfunktionselement oder als Funktionselement im Wohn- bzw. im Essbereich ausgeführt ist.

Das Betonteil kann beispielsweise als Arbeitsplatte, als Sitzelement, als Front, als Wange, als Tischplatte oder auch aus Verkleidung ausgeführt sein oder eines oder mehrere Teile dieser Elemente bilden.

Das Betonteil kann auch als Behältnis ausgeführt sein, beispielsweise als Dose, Obstkiste, etc.

Die genannten präkeramischen Polymere, aus denen die Beschichtung besteht, die in der Beschichtung enthalten sind oder durch deren Reaktion und/oder Vernetzung die erfindungsgemäße Beschichtung entsteht, können Polysilazane, Polysiloxane oder Polycarbosilane umfassen oder aus einer oder mehreren dieser Substanzen bestehen. Grundsätzlich ist es möglich, nur eine Polymerart oder auch mehrere unterschiedliche Arten der Polymere einzusetzen.

Die Beschichtung gemäß der vorliegenden Erfindung kann die genannten präkeramischen Polymere und/oder deren Reaktionsprodukte, insbesondere die sogenannte Polymerkeramik aufweisen oder daraus bestehen.

Die Erfindung betrifft des weiteren ein Möbelstück, insbesondere ein Möbelstück im Küchen- oder Essbereich, sowie ein Funktionselement, das dadurch gekennzeichnet ist, dass das Möbelstück bzw. das Funktionselement wenigstens teilweise aus Beton besteht oder Beton aufweist. Das Möbelstück kann ein oder mehrere Betonteile gemäß einem der Ansprüche 1 bis 9 aufweisen oder aus diesen bestehen.

Die Erfindung betrifft des weiteren ein Verfahren zum Beschichten eines Betonteils, das dadurch gekennzeichnet ist, dass die Beschichtung den Schritt des Aufbringens präkeramischer Polymere auf die Oberfläche des Betonteils umfaßt.

In weiterer Ausgestaltung der Erfindung ist vorgesehen, dass die Beschichtung ohne Einfluß einer erhöhten Temperatur bzw. ohne Wärmezufuhr erfolgt.

Selbstverständlich ist es ebenfalls denkbar, die Beschichtung unter Einfluß einer erhöhten Temperatur vorzunehmen. Die Temperaturbehandlung bzw. die Zufuhr von Wärme kann durch verschiedene Verfahren, wie Mikrowellentechnik, Wärmekammer und andere Verfahren durchgeführt werden.

Wie oben ausgeführt, können die präkeramischen Polymere eine oder mehrere der Substanzen Polysilazane, Polysiloxane oder Polycarbosilane umfassen oder aus einer oder mehreren dieser Substanzen bestehen.

In weiterer Ausgestaltung der Erfindung ist vorgesehen, dass die präkeramischen Polymere in Form einer Lösung vorliegen, die auf das Betonteil aufgebracht wird.

Wird eine vergleichsweise dünnflüssig Lösung verwendet, dringt diese in die Oberfläche des Betonteils ein, wird eine viskosere Lösung verwendet, kann vorgesehen sein, dass diese nicht oder nicht wesentlich in die Oberfläche des Betonteils eindringt.

Denkbar ist es weiterhin, die Beschichtung in Form von einer Schicht oder in Form von mehreren Schichten aufzubringen. In weiterer Ausgestaltung der Erfindung ist vorgesehen, dass die Beschichtung transparent oder transluzent ist, vorzugsweise ist die Beschichtung farblos, so dass der Betoncharakter erhalten bleibt.

In weiterer Ausgestaltung der Erfindung ist schließlich vorgesehen, dass die Beschichtung maschinell oder auch per Hand aufgetragen wird. Denkbar ist es, die Beschichtung mittels einer Spritzpistole, mit einem Lappen, mit einem Spachtel, mit einer Rakel oder mit einer Walze aufzubringen.

Weitere Einzelheiten und Vorteile der Erfindung werden anhand eines im folgenden dargestellten Ausführungsbeispiels näher erläutert.

Das Ausführungsbeispiel betrifft ein beschichtetes Betonteil, das die Anforderungen der Küchennorm hinsichtlich typischer Eigenschaften wie Kratzfestigkeit, Fleckunempfindlichkeit, Schlagfestigkeit, chemische Beständigkeit, Abriebfestigkeit, Einhalten der Hygiene, Einhalten der Widerstandsfähigkeit gegen trockene und feuchte Hitze, gewünschte Haptik, der Beständigkeit im Klimawechsel, der Licht- und Farbechtheit und er physiologischen Unbedenklichkeit aufweist.

Das Betonteil, das beispielsweise als Küchenarbeitsplatte dienen kann, weist eine Oberflächenbeschichtung aus präkeramischen Polymeren und/oder aus deren Reaktionsprodukten auf, wobei die wesentlichen Komponenten dieser Polymere aus Polysilazanen, Polysiloxanen oder Kombinationen daraus bestehen. Vorzugsweise ist vorgesehen, dass diese Substanzen in Verbindung mit anderen Harzen, Füllstoffen und Polymeren unter Einfluß von Wärme und Katalysatoren sich zu geeigneten Beschichtungssystemen umsetzen.

Ist angestrebt, dass das Beschichtungsmaterial vergleichsweise tief in die Betonteile eindringt, ist vorgesehen, dass das Beschichtungsmaterial als dünnflüssige Lösung vorliegt.

Das Beschichtungsmaterial kann aber auch dickflüssiger gewählt werden. Es dringt dann nicht sehr tief in die Betonteile ein und bildet dann eher eine aufliegende, keramisierte Schicht, vorzugsweise mit sehr guter Vernetzung mit dem Betonuntergrund.

Denkbar ist es auch, die Beschichtung in mehreren Aufträgen aufzubringen: Zunächst kann ein dünnflüssiges Material mit präkeramischen Polymeren eingesetzt werden, das sehr tief eindringt. Anschließend kann ein dickflüssigeres Material mit präkeramischen Polymeren eingesetzt werden, das vorzugsweise mit der ersten Beschichtung vernetzt, jedoch auf der Betonoberfläche eine widerstandsfähige Schutzschicht bildet, das die oben genannten Anforderungen erfüllt.

Denkbar ist es, die Lösung bzw. die darin enthaltenen Polymere durch eine Wärmebehandlung zur Aushärtung zu bringen.

Im Ergebnis ist eine sehr widerstandsfähige Beschichtungsoberfläche mit keramikähnlichen Eigenschaften erhalten.

Um den Betoncharakter der Teile, wie beispielsweise einer Arbeitsplatte oder einem Spülebecken etc. zu erhalten, ist vorzugsweise vorgesehen, dass das Beschichtungsmaterial farblos ist.

Die Beschichtung bzw. die Lösung kann verschiedene, Struktur gebende Partikel enthalten, so dass die Oberfläche nach der Aushärtung eine strukturierte Oberfläche besitzt.

Die Größe bzw. Art der Struktur ist auf diese Weise steuerbar.

Selbstverständlich ist es ebenfalls denkbar, die Beschichtung bzw. die Lösung ohne solche, die Struktur gebende Partikel auszuführen.

Insbesondere, wenn die Beschichtung in das Betonteil eindringt, beispielsweise bis zu 5 mm, ergibt sich nach der chemischen Vernetzung eine stabile, das heißt keramisierte Schicht, die sehr widerstandsfähig und stabil ist.

Der einzige oder die mehreren Aufträge können mit den in der Beschichtungstechnik üblichen Methoden erfolgen. Denkbar ist es beispielsweise, die Beschichtung mit einer Spritzpistole, von Hand mit einem Lappen, mit einem Spachtel, mit einer Rakel oder mit einer Walze aufzubringen.

Die Erfindung ist selbstverständlich nicht auf eine Arbeitsplatte beschränkt.

Denkbar ist es auch, die Betonteile als beliebige andere Elemente, vorzugsweise im Küchen- oder Wohnbereich einzusetzen, wie beispielsweise in Form von Fronten, Verkleidungen, Wangen, Tischplatten, etc.

Auch ist es denkbar, funktionelle Teile, insbesondere im Wohn-, Ess- und/oder Küchenbereich erfindungsgemäß bereitzustellen, wie beispielsweise Behälter, Dosen, Kartoffelkisten, Obstbehälter, die aufgrund der erfindungsgemäßen Ausgestaltung eine stabile und hygienische Beschichtung aufweisen.

Die Betonteile sind mit allen denkbaren Abmessungen, Form, Rundungen bis hin zu Sitzgelegenheiten beschichtbar.

Neben den oben genannten Beispielen lässt sich als weiteres Beispiel für die vorliegende Erfindung eine Betonarbeitsplatte mit einer integrierten Spüle aus Beton anführen.

Die erfindungsgemäße Beschichtung muß nicht unmittelbar auf der Oberfläche des betreffenden Betonteils aufgebracht sein. Denkbar ist es ebenfalls, die Beschichtung auf einer bereits Vorhandenen Beschichtung, Lackierung etc. des Betonteils aufzubringen.

## Patentansprüche

1. Betonteil mit einer Beschichtung, wobei die Beschichtung aus präkeramischen Polymeren besteht, präkeramische Polymere enthält oder wenigstens teilweise auf präkeramischen Polymeren basiert.

2. Betonteil nach Anspruch 1, **dadurch gekennzeichnet, dass** die Beschichtung transparent oder transluzent ist.

3. Betonteil nach Anspruch 1 oder 2, **dadurch gekennzeichnet, dass** die präkeramischen Polymere derart ausgeführt sind, dass sie ohne Wärmeeinwirkung aushärten und/oder vernetzten.

4. Betonteil nach Anspruch 1 oder 2, **dadurch gekennzeichnet, dass** die präkeramischen Polymere derart ausgeführt sind, dass bei Wärmeeinwirkung aushärten und/oder vernetzten.

5. Betonteil nach einem der vorhergehenden Ansprüche, **dadurch gekennzeichnet, dass** die Beschichtung farblos ist.

6. Betonteil nach einem der vorhergehenden Ansprüche, **dadurch gekennzeichnet, dass** die Beschichtung in Form einer Schicht oder in Form mehrerer Schichten ausgeführt ist.

7. Betonteil nach einem der vorhergehenden Ansprüche, **dadurch gekennzeichnet, dass** das Betonteil ein Möbelstück ist, Teil eines Möbelstückes ist oder als Funktionselement, vorzugsweise als Küchenfunktionselement ausgeführt ist.

8. Betonteil nach Anspruch 7, **dadurch gekennzeichnet, dass** das Betonteil als Arbeitsplatte, als Sitzelement, als Front, als Wange, als Tischplatte oder als Verkleidung ausgeführt ist oder einen Teil dieser Elemente bildet.

9. Betonteil nach Anspruch 7 oder 8, **dadurch gekennzeichnet, dass** das Betonteil als Behältnis ausgeführt ist.

10. Betonteil nach einem der vorhergehenden Ansprüche, **dadurch gekennzeichnet, dass** die präkeramischen Polymere eine oder mehrere der Substanzen Polysilazane, Polysiloxane oder Polycarbosilane umfassen oder aus einer oder mehreren dieser Substanzen bestehen.

11. Möbelstück, insbesondere Möbelstück im Küchen- oder Essbereich, oder Funktionselement für den Wohn- und/oder Küchenbereich **dadurch gekennzeichnet, dass** das Möbelstück oder Funktionselement wenigstens teilweise aus Beton besteht oder Beton aufweist.

12. Möbelstück, nach Anspruch 11, **dadurch gekennzeichnet, dass** das Möbelstück oder das Funktionselement eine Beschichtung aufweist.

13. Möbelstück nach Anspruch 11 oder 12, **dadurch gekennzeichnet, dass** das Möbelstück eines oder mehrere Betonteile gemäß einem der Ansprüche 1 bis 10 aufweist oder aus diesen besteht.

14. Verfahren zum Beschichten eines Betonteils, **dadurch gekennzeichnet, dass** die Beschichtung den Schritt des Aufbringens präkeramischer Polymere auf die Oberfläche des Betonteils umfaßt.

15. Verfahren nach Anspruch 14, **dadurch gekennzeichnet, dass** die Beschichtung ohne Wärmeeinfluß vorgenommen wird.

16. Verfahren nach Anspruch 14, **dadurch gekennzeichnet, dass** die Beschichtung mit Wärmeeinfluß vorgenommen wird.

17. Verfahren nach einem der Ansprüche 14 bis 16, **dadurch gekennzeichnet, dass** die präkeramischen Polymere eine oder mehrere der Substanzen Polysilazane, Polysiloxane oder Polycarbosilane umfassen oder aus einer oder mehreren dieser Substanzen bestehen.

18. Verfahren nach einem der Ansprüche 14 bis 17, **dadurch gekennzeichnet, dass** die präkeramischen Polymere in Form einer Lösung vorliegen, die auf das Betonteil aufgebracht wird.

19. Verfahren nach Anspruch 18, **dadurch gekennzeichnet, dass** die Lösung derart dünnflüssig ist, dass sie in die Oberfläche des Betonteils eindringt.

20. Verfahren nach Anspruch 18, **dadurch gekennzeichnet, dass** die Lösung derart viskos ist, dass sie nicht oder nicht wesentlich in die Oberfläche des Betonteils eindringt.

21. Verfahren nach einem der Ansprüche 14 bis 20, **dadurch gekennzeichnet, dass** die Beschichtung in Form von einer Schicht oder in Form von mehreren Schichten aufgebracht wird.

22. Verfahren nach einem der Ansprüche 14 bis 21, **dadurch gekennzeichnet, dass** die Beschichtung transparent oder transluzent ist.

23. Verfahren nach einem der Ansprüche 14 bis 22, **dadurch gekennzeichnet, dass** die Beschichtung farblos ist.

24. Verfahren nach einem der vorhergehenden Ansprüche, **dadurch gekennzeichnet, dass** die Beschichtung mit einer Spritzpistole, mit einem Lappen, mit einem Spachtel, mit einem Rakel oder mit einer Walze aufgebracht wird.
